# EUROPÄISCHE PATENTSCHRIFT

(11) **EP 3 556 056 B1**
(45) Veröffentlichungstag und Bekanntmachung des Hinweises auf die Patenterteilung: **07.10.2020**
(21) Anmeldenummer: 17808021.4
(22) Anmeldetag: 15.11.2017
(51) Int. Cl.: H04L 12/28, H04L 12/24, G06F 1/26

(54) **STELLANTRIEB MIT EINER USB-SCHNITTSTELLE**
ACTUATOR WITH A USB INTERFACE
MÉCANISME DE COMMANDE AVEC INTERFACE USB

(30) Priorität: 13.12.2016 DE 102016224861
(43) Veröffentlichungstag der Anmeldung: 23.10.2019
(73) Patentinhaber: Siemens Schweiz AG, 8047 Zürich (CH)
(72) Erfinder: BETSCHART, Adrian, 6330 Cham (CH); SOLTERMANN, Sacha, 6312 Steinhausen (CH)
(74) Vertreter: Maier, Daniel Oliver
(86) Internationale Anmeldenummer: PCT/EP2017/079264
(87) Internationale Veröffentlichungsnummer: WO 2018/108420

(56) Entgegenhaltungen:
- DE-A1-102013 106 572
- US-A- 6 125 448
- US-A1- 2013 313 904

## Beschreibung

Die Erfindung betrifft einen Stellantrieb für eine HVAC-Anlage (für Heating, Ventilation, and Air Conditioning). Der Stellantrieb umfasst einen Stromversorgungsanschluss zum Anschließen des Stellantriebs an eine externe Stromversorgung. Er umfasst zudem eine Steuereinheit zur Steuerung und Überwachung des Stellantriebs sowie eine Peripherieeinheit mit insbesondere leistungsstarken Verbrauchern. Weiterhin weist der Stellantrieb eine Anschlussbuchse auf, welche mit einer seriellen Schnittstelle der Steuereinheit insbesondere signal- und datentechnisch verbunden ist. Die Steuereinheit ist dazu eingerichtet, erste Konfigurationsdaten von einem an der Anschlussbuchse angeschlossenen Bediengerät zu empfangen. Alternativ oder zusätzlich ist die Steuereinheit dazu eingerichtet, zweite Konfigurationsdaten und/oder Diagnosedaten an das Bediengerät zu senden.

Aus der deutschen Offenlegungsschrift DE 10 2013 106 572 A1 ist ein Feldbuskoppler bekannt, welcher zudem einen Serviceanschluss für Diagnosedaten aufweist, über den er mit einem Servicerechner verbunden ist. Der Serviceanschluss kann beispielsweise gemäß dem USB-Standard ausgebildet sein. Des Weiteren setzt der Feldbuskoppler über den Feldbus ausgetauschte Daten auf einen seriellen Subbus um, über den I/O-Module an den Feldbuskoppler angekoppelt sind. Neben dem Subbus, der nur einer Übertragung von Daten dient, kann ein weiterer Bus zur Stromversorgung der I/O-Module und/oder des Feldbuskopplers vorhanden sein.

Aus der veröffentlichten US-Anmeldung 2013/0313904 A1 ist ein integrierter Schaltkreis bekannt, der für die Auswahl aus verschiedenen Stromquellen abhängig von gemessenen Spannungspegeln vorgesehen ist, wobei eine Stromquelle als Priorität gewählt wird, wenn beide Stromquellen verfügbar sind.

Aus dem US-Patent 6 125 448 A ist eine Stromversorgung für ein Gerät bekannt, die entweder aus dem Netzwerkbus oder aus einer lokalen Stromversorgung gespeist wird.

Der Stromversorgungsanschluss kann z.B. ein Anschlusskabel sein, welches aus einem Stellantriebsgehäuse herausgeführt ist. Das Kabelende kann dann z.B. an einer Anschlussklemme in einem Klemmkasten aufgelegt werden. Alternativ kann am Stellantriebsgehäuse eine Stromversorgungsbuchse angeordnet sein, in welche ein Anschlusskabel mit einem darauf abgestimmten Stecker eingesteckt werden kann. Das andere Kabelende kann dann wieder auf eine Anschlussklemme aufgelegt werden.

Die Steuereinheit umfasst vorzugsweise einen prozessorgestützten Mikrocontroller. Letzterer ist eingerichtet bzw. programmiert, ein im Mikrocontroller gespeichertes oder ein in den Mikrocontroller ladbares Computerprogramm auszuführen.

Die leistungsstarken Verbraucher eines Stellantriebs sind vor allem die Motorsteuereinheit sowie der nachgeschaltete elektrische Motor, welcher typischerweise über ein Reduziergetriebe eine an einem Stellanschluss des Stellantriebs angebrachte Last bewegt. Die Last kann z.B. ein Ventil oder eine Klappe zur Einstellung eines Flüssigkeits- oder Luftstroms sein. Der Stellanschluss kann ein Drehstellanschluss sein, um z.B. eine Drehstellbewegung in einem Winkelbereich von 0° bis 90° vorzunehmen. Er kann auch ein linearer Stellanschluss sein.

Üblicherweise weist die Peripherieeinheit noch eine Kommunikationsschnittstelle zum Austausch von Antriebsdaten mit einer übergeordneten Steuervorrichtung auf. Die Antriebsdaten können z.B. Busadressen, Soll-Stellwerte oder Ist-Stellwerte umfassen. So kann z.B. die übergeordnete Steuervorrichtung an einen Stellantrieb mit einer zugeordneten Busadresse einen Soll-Stellwert ausgeben, dem der Stellantrieb folgt und dann die entsprechende Stellbewegung ausführt und ggf. quittiert.

Die Peripherieeinheit kann folglich auch als Leistungsteil des Stellantriebs bezeichnet werden, das im Gegensatz zum Steuerungsteil oder zur "Steuerelektronik" des Stellantriebs eine vielfach höhere elektrische Leistung benötigt.

Die Übertragung der zuvor genannten Daten kann automatisch erfolgen, wie z.B. nach dem Verbinden des Stellantriebs mit dem Bediengerät über ein geeignetes serielles Schnittstellenkabel. Sie kann auch erst nach einer benutzerseitigen Eingabe auf dem Bediengerät erfolgen bzw. freigegeben werden.

Stellantriebe werden typischerweise erst nach ihrer Herstellung entsprechend den Kundenanforderungen oder dem vorgesehenen Einsatzgebiet des Stellantriebs konfiguriert. Hierzu werden entsprechende Konfigurationsdaten von einem Bediengerät auf den Stellantrieb übertragen werden. Derartige Konfigurationsdaten sind z.B. Parameter wie die Drehrichtung, die maximale Drehgeschwindigkeit, das maximale Drehmoment, eine Geräte- oder Busadresse oder eine Seriennummer des Stellantriebs. Die Diagnosedaten können Einschaltzeiten, die Stromaufnahme oder Wartungszeitpunkte des Stellantriebs oder protokollierte Fehler umfassen.

Bevor ein Stellantrieb mittels eines typischerweise mobilen Bediengeräts über eine zumeist proprietäre Datenschnittstelle konfiguriert werden kann, muss der Stellantrieb neben dem Anschließen des Bediengeräts zusätzlich mit Strom versorgt werden. Üblicherweise wird der Stellantrieb über den Stromversorgungsanschluss des Stellantriebs mit Strom versorgt, wie z.B. mittels eines Netzteils oder eines Akkublocks. Hintergrund für die separate Stromversorgung ist, dass die Leistungsaufnahme eines Stellantriebs viel zu groß ist, als dass diese von einem mobilen Bediengerät (Handheld-Gerät) bereitgestellt werden könnte, wie z.B. von einem Smartphone oder Tabletcomputer. Dies ist besonders bei HVAC-Stellantrieben der Fall, die eine Leistungsaufnahme von typischerweise mehreren Watt aufweisen. Hinzu kommt, dass das Einschalten des Stellantriebs oder das Anschalten des Stellantriebs an die externe Stromversorgung zu hohen Einschaltstromspitzen führt, insbesondere durch das Laden von Kondensatoren in der Peripherieeinheit. Dieses würde folglich zum sofortigen Spannungseinbruch im Falle der Stromversorgung durch das mobile Bediengerät führen.

Es ist somit eine Aufgabe der Erfindung, einen Stellantrieb mit einer zuverlässigeren seriellen Schnittstelle anzugeben.

Die Aufgabe wird durch die Gegenstände des unabhängigen Patentanspruchs 1 gelöst. Vorteilhafte Ausführungsformen der Erfindung sind in den abhängigen Ansprüchen beschrieben.

Erfindungsgemäß sind die Anschlussbuchse und der Stromversorgungsanschluss derart miteinander verschaltet, dass ein jeweiliger extern eingespeister Strom in einen gemeinsamen Anschluss einspeist. Insbesondere speist ein jeweiliger extern eingespeister Strom ausschließlich in einen gemeinsamen Anschluss. Mit "ausschließlich" ist hier gemeint, dass der über den Stromversorgungsanschluss eingespeiste Strom nicht in die Anschlussbuchse der seriellen Schnittstelle zurück in das angeschlossene Bediengerät speisen kann. Für den umgekehrten Fall bedeutet dies, dass der über die Anschlussbuchse der seriellen Schnittstelle eingespeiste Strom nicht über den Stromversorgungsanschluss zurück in die externe Stromversorgung speisen kann. Dadurch wird vor mögliche Beschädigung vor allem des Bediengeräts durch Überspannung verhindert.

Es ist weiter gemäß der Erfindung dem gemeinsamen Anschluss ein Spannungsregler zur Stromversorgung der Steuereinheit nachgeschaltet. Zudem ist dem gemeinsamen Anschluss ein ansteuerbares Schaltmittel nachgeschaltet, welches durch die Steuereinheit zum Öffnen und Schließen ansteuerbar ist. Bei geschlossenem Zustand des Schaltmittels ist dann die am gemeinsamen Anschluss anliegende Spannung als Stromversorgung an die Peripherieeinheit durchschaltbar. Die Steuereinheit ist weiter dazu eingerichtet, das Schaltmittel erst dann schließend anzusteuern, wenn ein durch die Steuereinheit an einem Einspeisepunkt des Stromversorgungsanschlusses erfasster erster Spannungswert einen ersten Vergleichswert überschreitet oder wenn ein durch die Steuereinheit am gemeinsamen Anschluss erfasster zweiter Spannungswert einen zweiten Vergleichswert überschreitet.

Der Erfindung liegt die Erkenntnis zugrunde, dass es für die Datenübertragung zwischen dem Bediengerät und dem Stellantrieb völlig ausreichend ist, wenn nur die für die Datenübertragung erforderlichen elektronischen Komponenten des Stellantriebs im Betrieb sind bzw. mit Strom versorgt sind. Diese Komponenten sind typischerweise die Steuereinheit des Stellantriebs, der Spannungsregler zumindest für die Steuereinheit, vorzugsweise eine Entkopplungsdiode, um eine rückwärtige Einspeisung in das angeschlossene Bediengerät zu verhindern, ein nichtflüchtiger Speicher (Flash-Speicher, EEPROM), die serielle Schnittstelle sowie ein elektronisches Mittel zum Erfassen des ersten oder zweiten Spannungswertes sowie zum Vergleichen mit dem ersten oder zweiten Vergleichswert. Das elektronische Mittel kann z.B. ein Spannungskomparator sein. Der Spannungsregler ist vorzugsweise ein linearer Spannungsregler oder alternativ ein DC/DC-Wandler.

Es bleibt mit anderen Worten die gesamte leistungsstarke Peripherieeinheit stromlos. Erreicht wird dies durch ein ansteuerbares Schaltmittel, welches die Stromzufuhr vom Stromversorgungsanschluss unterbricht. Das Schaltmittel ist z.B. ein Schalttransistor oder ein Relais.

Dadurch verringert sich vorteilhaft die Leistungsaufnahme des Stellantriebs über die serielle Anschlussbuchse auf einen Bereich von z.B. 10mW bis 100mW. Eine solche verhältnismäßig geringe elektrische Leistung kann problemlos von einer seriellen Schnittstelle des Bediengeräts bereitgestellt werden.

Nach einer besonders vorteilhaften Ausführungsform ist die serielle Schnittstelle eine USB-Schnittstelle und die stellantriebsseitige Anschlussbuchse eine USB-Anschlussbuchse.

Die USB-Anschlussbuchse ist vorzugsweise am Gehäuse des Stellantriebs angeordnet. Insbesondere schließt die USB-Anschlussbuchse zumindest nahezu bündig mit der Außenseite des Stellantriebsgehäuses ab. Die USB-Anschlussbuchse kann z.B. eine USB-Buchse vom Typ A, eine USB-Minibuchse vom Typ B, eine USB-Mikrobuchse vom Typ B oder eine USB-Mikrobuchse vom Typ C sein.

Der besondere Vorteil dieser Ausführungsform liegt in der weiten Verbreitung der USB-Schnittstelle als standardisierte Schnittstelle. Zudem verfügt der größte Teil der als mobile Bediengeräte in Frage kommenden Handheld-Geräte wie Tabletcomputer und Smartphones bereits über eine derartige USB-Schnittstelle mit einer entsprechenden USB-Anschlussbuchse. Aufgrund der vergleichsweise geringen bereitzustellenden elektrischen Leistung für einen erfindungsgemäßen Stellantrieb sind selbst moderne Tabletcomputer und Smartphones in der Lage, z.B. im speziellen OTG-Modus (für "On The Go"), einen ausreichenden Strom bzw. eine ausreichende elektrische Leistung für die Datenübertragung zur Verfügung zu stellen.

Alternativ kann die serielle Schnittstelle eine IEEE 1394-Schnittstelle oder eine Lightning-Schnittstelle und die Anschlussbuchse eine IEEE 1394-Anschlussbuchse oder eine Lightning-Anschlussbuchse sein. Derartige Schnittstellen und Anschlussbuchsen werden vor allem bei Handheld-Geräten von der Fa. Apple Inc. eingesetzt.

Einer weiteren Ausführungsform zufolge ist der erste oder zweite Vergleichswert derart festgelegt, dass der erste oder zweite Spannungswert den jeweiligen Vergleichswert nach dem Einschalten der externen Stromversorgung sicher, d.h. zuverlässig überschreitet.

Dadurch erhöht sich die Zuverlässigkeit der Schnittstelle nochmals. Im einfachsten Fall ist die serielle Schnittstelle des Stellantriebs, insbesondere die USB-Schnittstelle, zur Einspeisung einer elektrischen Gleichspannung von maximal 5V bis 9V eingerichtet bzw. konfiguriert. Diese Gleichspannung liegt dann auch am gemeinsamen Anschluss an, ggf. reduziert um die Durchlassspannung im Falle einer vorhandenen Entkopplungsdiode. Dagegen liegt die über die externe Stromversorgung am Einspeisepunkt des Stromversorgungsanschluss bereitgestellte Versorgungsgleichspannung typischerweise im Bereich von 20V bis 36V. Dies ist dann der Fall, wenn der Stellantrieb eingeschaltet ist, an die externe Stromversorgung angeschaltet ist oder wenn die externe Stromversorgung eingeschaltet ist. Ein typischer Wert liegt bei 24V.

Vorzugsweise wird ein am Einspeisepunkt des Stromversorgungsanschlusses anliegender erster Spannungswert erfasst und dieser mit einem ersten Vergleichswert verglichen. Das Schaltmittel wird erst dann schließend angesteuert, wenn der erste Spannungswert am Einspeisepunkt von OV auf die 24V der externen Stromversorgung ansteigt und somit den ersten Vergleichswert sicher übersteigt. Der erste Vergleichswert kann z.B. auf einen Voltwert von 12V festgelegt sein. Aus Sicherheitsgründen sollte der erste Vergleichswert jedoch einen Voltwert aufweisen, der zumindest 1V über der nominalen eingespeisten USB-Gleichspannung liegt, wie z.B. bei 6V.

Alternativ kann anstelle des ersten Spannungswerts ein zweiter Spannungswert am gemeinsamen Anschluss erfasst und dieser mit einem zweiten Vergleichswert verglichen werden. Der zweite Vergleichswert ist derart bemessen, dass dieser vorzugsweise mittig zwischen der nominalen USB-Gleichspannung und der nominalen Versorgungsgleichspannung der externen Stromversorgung liegt. Im vorliegenden Fall weist der zweite Vergleichswert dann einen Voltwert von (24V - 5V) / 2 = 9.5V auf. Aus Sicherheitsgründen sollte auch in diesem Fall der zweite Vergleichswert einen Voltwert aufweisen, der zumindest 1V über der nominalen eingespeisten USB-Gleichspannung liegt.

Dies bedeutet, dass im stromlosen Zustand des Stellantriebs zunächst nur die USB-Gleichspannung am gemeinsamen Anschluss anliegt. Diese Gleichspannung setzt dann der Spannungsregler z.B. auf einen Spannungswert von 3.3V als typische Betriebsspannung für einen Mikrocontroller herab. Das Schaltmittel zum Durchschalten der Versorgungsspannung an die Peripherieeinheit sperrt bzw. wird sperrend angesteuert. Wird nun der Stellantrieb eingeschaltet bzw. an die externe Stromversorgung geschaltet, so steigt die am gemeinsamen Anschluss anliegende Gleichspannung auf den Wert der Versorgungsspannung von 24V. Der zweite Spannungswert übersteigt somit zuverlässig und mit großem Sicherheitsspannungswert den auf die Mitte der Differenzspannung festgelegten zweiten Vergleichswert von 9.5V. Daraufhin wird das Schaltmittel zum Durchschalten der nun vorliegenden Versorgungsspannung von der externen Versorgungsspannung an die Peripherieeinheit durchgeschaltet. Vorzugsweise werden zwei Entkopplungsdioden eingesetzt, um ein Zurückspeisen der USB-Gleichspannung sowie der Versorgungsspannung zu verhindern. Bezüglich der Berechnung des mittigen zweiten Vergleichswerts fällt die jeweilige Durchlassspannung der Dioden heraus.

Ergänzend wird bemerkt, dass der Stellantrieb noch ein zwischen dem Stromversorgungsanschluss und dem Einspeisepunkt des Stromversorgungsanschlusses geschaltetes Entstörungs-, Netz- und/oder Überspannungsfilter aufweisen kann sein. Alternativ oder zusätzlich kann der Stellantrieb ein zwischen dem Stromversorgungsanschluss und dem Einspeisepunkt des Stromversorgungsanschlusses geschaltetes Netzteil zur Umwandlung einer von der externen Stromversorgung stammenden Versorgungswechselspannung in eine Gleichspannung aufweisen. Das Netzteil kann z.B. ein 230V/50Hz-Netzteil oder ein 100V/60Hz-Netzteil sein. Das Netzteil weist vorzugsweise eine galvanische Trennung auf. Alternativ zum Netzteil kann der Stellantrieb einen DC/DC-Wandler aufweisen, um vorzugsweise potenzialfrei eine Versorgungsgleichspannung der externen Stromversorgung in eine ausgangsseitige Gleichspannung umzuwandeln. Der DC/DC-Wandler kann z.B. dazu eingerichtet sein, eine Versorgungsgleichspannung von 400V in eine dazu potentialfreie ausgangsseitige Gleichspannung von 24V umzuwandeln. Einer weiteren Ausführungsform zufolge ist die Steuereinheit dazu eingerichtet, die ersten Konfigurationsdaten nur dann zu empfangen und/oder die zweiten Konfigurationsdaten und/oder Diagnosedaten nur dann zu senden, wenn der erste oder zweite Spannungswert den jeweiligen Vergleichswert unterschreitet. Dies ist z.B. dann vorteilhaft, wenn aus Sicherheitsgründen ein externer Zugriff auf den Stellantrieb über die serielle Schnittstelle im laufenden Betrieb des Stellantriebs verhindert werden soll.

Insbesondere ist die Steuereinheit nach einer weiteren Ausführungsform dazu eingerichtet, die ersten Konfigurationsdaten in einem nichtflüchtigen Speicher abzulegen und/oder darauf basierend ein Betriebsprogramm der Steuereinheit, d.h. des Mikrocontrollers zu aktualisieren. Der Speicher ist vorzugsweise ein Flash-Speicher, der seinen Speicherinhalt auch im stromlosen Zustand des Speichers beibehält. Ein Teil der Konfigurationsdaten kann zumindest einen Teil eines aktualisierten Betriebsprogramms im Sinne einer Firmware umfassen, das dann in den Flash-Speicher eines Mikrocontrollers geladen wird und nach einem (Powerup-)Reset des Mikrocontrollers ausgeführt wird.

Vorzugweise ist die maximale Gesamtleistung der Peripherieeinheit mindestens um den Faktor 2, insbesondere mindestens um den Faktor 5 größer als die maximale elektrische Leistung der für die Datenübertragung erforderlichen elektronischen Komponenten des Stellantriebs. Die elektronischen Komponenten sind typischerweise die Steuereinheit des Stellantriebs, der Spannungsregler zumindest für die Steuereinheit, die Entkopplungsdiode, der nichtflüchtige Speicher (EEPROM, Flash-Speicher) und die serielle Schnittstelle.

Nach einer weiteren Ausführungsform umfasst die Peripherieeinheit zusätzlich die Kommunikationsschnittstelle. Dadurch ist eine Datenkommunikation des Stellantriebs mit einer übergeordneten Steuervorrichtung der HVAC-Anlage möglich. Insbesondere weist die Steuereinheit einen Mikrocontroller, zumindest einen A/D-Umsetzer, die serielle Schnittstelle sowie einen nichtflüchtigen elektronischen Speicher (EEPROM) zumindest zur Speicherung der Konfigurationsdaten und/oder Diagnosedaten auf.

Vorzugsweise ist zumindest eine dieser elektronischen Komponenten, d.h. der zumindest eine A/D-Umsetzer, die serielle Schnittstelle sowie der nichtflüchtige elektronische Speicher (EEPROM) im Mikrocontroller bereits integriert.

Schließlich kann zumindest eine der elektronischen Komponenten der Steuereinheit, d.h. der Mikrocontroller, der zumindest eine A/D-Umsetzer, die serielle Schnittstelle oder der nichtflüchtige elektronische Speicher (EEPROM) bzw. der Mikrocontroller mit den bereits integrierten elektronischen Komponenten zumindest mittelbar, d.h. direkt oder über ein weiteres Bauelement durch den Spannungsregler elektrisch gespeist werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung in Verbindung mit der zugehörigen Figur.

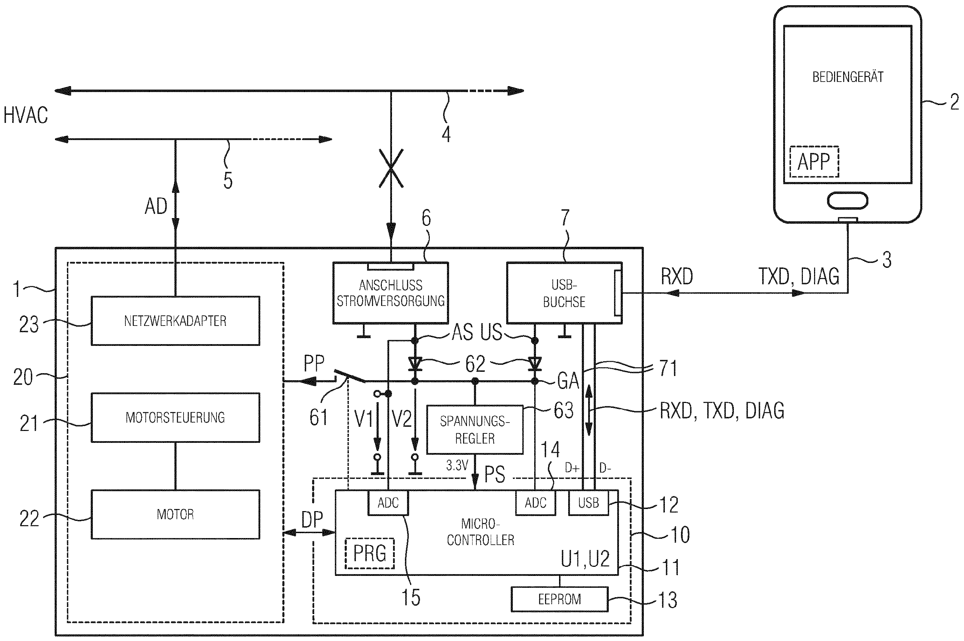

Die einzige Figur zeigt das Schaltungsschema eines beispielhaften Stellantriebs 1 gemäß der Erfindung. Der Stellantrieb 1 weist im linken Teil der Figur eine Peripherieeinheit 20 auf, welche eine Motorsteuereinheit 21 bzw. "Motorsteuerung" und einen elektrischen Motor 22 aufweist, der durch die Motorsteuereinheit 21 elektrisch gespeist wird. Die Motorsteuereinheit 21 weist typischerweise einen Umrichter auf. Weiterhin weist die Peripherieeinheit 20 eine Kommunikationsschnittstelle 23 bzw. Netzwerkadapter zum Anschluss an einen Kommunikationsbus 5 auf. Die Kommunikationsschnittstelle 23 ist dabei zur Kommunikation mit einer übergeordneten Steuereinrichtung der HVAC-Anlage HVAC vorgesehen. Mit AD sind die Antriebsdaten bezeichnet, die zwischen dem gezeigten Stellantrieb 1 und der nicht weiter gezeigten übergeordneten Steuereinrichtung ausgetauscht werden. Die Antriebsdaten AD werden von einer Steuereinheit 10 des Stellantriebs 1 über diese Kommunikationsschnittstelle 23 ausgegeben und von dieser empfangen und bilden einen Teil der Stellantriebsdaten DP, die zwischen der Steuereinheit 10 und der Peripherieeinheit 20 ausgetauscht werden. Die Stellantriebsdaten DP können weitere Daten umfassen wie z.B. Diagnosedaten von der Motorsteuereinheit 21, Motortemperaturwerte oder Signalisierungen, wenn ein Endanschlag des Stellantriebs erreicht wird.

Im oberen rechten Teil des als Kasten dargestellten Stellantriebs 1 ist ein Stromversorgungsanschluss 6 zum Anschließen des Stellantriebs 1 an eine externe Stromversorgung 4 sowie eine USB-Anschlussbuchse 7 als Beispiel für eine serielle Anschlussbuchse dargestellt. An der USB-Anschlussbuchse 7 ist über ein USB-Kabel 3 beispielhaft ein Tabletcomputer 2 als Bediengerät zur möglichen Datenübertragung angeschlossen. Auf diesem Wege ist prinzipiell auch eine Stromentnahme aus dem Akkumulator des Tabletcomputers 2 möglich, um ein an der USB-Anschlussbuchse des Tabletcomputers 2 angeschlossenes Gerät mit Strom zu versorgen. Maßgeblich für die letztere Betriebsart ist, dass der USB-Controller des Tabletcomputers bzw. allgemein des Bediengeräts 2 dazu eingerichtet ist, gemäß der USB-OTG-Spezifikation (OTG für "On-The-Go") als Host, d.h. als Busmaster, zu agieren und eine elektrische Leistung zur Versorgung des angeschlossenen Geräts, wie hier des Stellantriebs 1, bereitzustellen. Der USB-Controller im Stellantrieb 1 ist entsprechend dazu eingerichtet, zumindest als Slave, d.h. auch als USB-Host, zu agieren. Der USB-Controller 12 ist dabei zur Datenübertragung mit dem angeschlossenen Bediengerät 2 über zwei mit D+ und D- bezeichnete Datenleitungen 71 mit der stellantriebsseitigen USB-Anschlussbuchse 7 elektrisch verbunden.

Mit RXD sind erste Konfigurationsdaten bezeichnet, die durch den Stellantrieb 1 aus dem Tabletcomputer 2 geladen werden können. Mit TXD sind zweite Konfigurationsdaten und mit DIAG Diagnosedaten bezeichnet, die durch den Tabletcomputer 2 aus dem Stellantrieb 1 geladen werden können. Mit "APP" ist hierzu eine Applikation auf dem Tabletcomputer 2 bezeichnet, welche dazu programmiert ist, die Übertragung der Konfigurationsdaten TXD, RXD sowie der Diagnosedaten DIAG zwischen dem Tabletcomputer 2 und dem angeschlossenen Stellantrieb 1 durch entsprechende benutzerseitige Eingaben auf dem Tabletcomputer 2 auszuführen.

Gemäß der Erfindung sind die Anschlussbuchse 7 und der Stromversorgungsanschluss 6 nun derart miteinander verschaltet, dass ein jeweiliger extern eingespeister Strom ausschließlich in einen gemeinsamen Anschluss GA einspeist. Erreicht wird dies durch zwei Entkopplungsdioden 62, 63. Alternativ können auch zwei Schalttransistoren verwenden, die bei Vorliegen einer positiven Spannung in Diodendurchflussrichtung schließend angesteuert werden. Mit AS ist dabei der Einspeisepunkt des Stromversorgungsanschlusses 6 und mit US der Einspeisepunkt der Anschlussbuchse 7 bezeichnet. Mit V1 und V2 ist ein erster und zweiter Spannungswert bezeichnet, die bezogen auf ein gemeinsames Bezugspotenzial (Masse) am Einspeisepunkt AS des Stromversorgungsanschlusses 6 bzw. am gemeinsamen Anschluss GA anliegen und durch jeweils einen A/D-Umsetzer 14, 15 der Steuereinheit 10 erfasst werden. Dem gemeinsamen Anschluss GA ist ein Spannungsregler 63 zur Energieversorgung PS der Steuereinheit 10 nachgeschaltet.

Im vorliegenden Beispiel umfasst die Steuereinheit 10 einen Mikrocontroller 11, in dem bereits die beiden A/D-Umsetzer 14, 15 sowie eine USB-Schnittstelle 12 bzw. ein USB-Controller integriert sind. Üblicherweise ist auch ein nichtflüchtiger Speicher 13, typischerweise ein EEPROM-Speicher, bereits integriert. Dieser ist aus Gründen der Übersichtlichkeit figürlich separat dargestellt. Der nichtflüchtige Speicher 13 ist dazu vorgesehen, das gesamte Betriebsprogramm PRG zur Steuerung und Überwachung des Stellantriebs 1 sowie die Konfigurationsdaten zu speichern, um den Stellantrieb 1 für die vorgesehene Applikation einzustellen. Im Speicher 13 können auch Diagnosedaten DIAG im Sinne eines Fehlerspeichers nichtflüchtig abgelegt werden.

Dem gemeinsamen Anschluss GA ist gemäß der Erfindung ein ansteuerbares Schaltmittel 61 zur Stromversorgung der Peripherieeinheit 20 nachgeschaltet.

Im vorliegenden Beispiel erfolgt die Ansteuerung durch einen digitalen Ausgang am Mikrocontroller 11 der Steuereinheit 10. Der Mikrocontroller 11 ist auf Basis des Betriebsprogramms PRG auf dem Mikrocontroller 11 entsprechend dazu programmiert bzw. eingerichtet, das Schaltmittel 61 erst dann schließend anzusteuern, wenn ein am Einspeisepunkt AS des Stromversorgungsanschlusses 6 erfasster erster Spannungswert V1 einen ersten Vergleichswert U1 überschreitet. Alternativ kann der Mikrocontroller 11 auf Basis des Betriebsprogramms PRG dazu programmiert sein, das Schaltmittel 61 erst dann schließend anzusteuern, wenn ein durch den Mikrocontroller 11 am gemeinsamen Anschluss GA erfasster zweiter Spannungswert V2 einen zweiten Vergleichswert U2 überschreitet Die beiden Spannungswerte V1, V2 liegen im Mikrocontroller 11 nach der Analog-/Digital-Umsetzung bereits als Digitalwerte vor. Die beiden Vergleichswerte V1, V2 sind vorzugsweise Teil der Konfigurationsdaten und sind im Speicher 13 hinterlegt.

Somit ist vorteilhaft auch im stromlosen Zustand des Stellantriebs 1 - symbolisiert durch ein Schnitt- oder Scherensymbol in der externen Stromversorgung 4 am Eingang des Stromversorgungsanschlusses 6 - eine elektrische Versorgung der für die Übertragung der Konfigurationsdaten RXD, RXD sowie der Diagnosedaten DIAG erforderlichen Komponenten 10-15, 63, 63 möglich, ohne dass die gesamte Stromversorgung wegen des erfindungsgemäß abgeschalteten Leistungsteils 20 zusammenbricht.

### Bezugszeichenliste

- 1: Stellantrieb
- 2: Bediengerät, mobiles Bediengerät, Tablet, Smartphone
- 3: Verbindungsleitung, Kabel, USB-Kabel, Firewire-Kabel
- 4: Energieversorgungsleitung, Stromleitung
- 5: Netzwerk, Kommunikationsbus
- 6: Stromversorgungsanschluss, Netzteil
- 7: Anschlussbuchse, USB-Buchse, Firewire-Buchse
- 10: Steuereinheit, elektronische Steuereinheit
- 11: Mikrocontroller
- 12: serielle Schnittstelle, USB-Schnittstelle, Firewire-Schnittstelle
- 13: elektronischer, nichtflüchtiger Speicher, EEPROM
- 14, 15: Analog-/Digital-Umsetzer
- 20: Peripherieeinheit, Leistungsteil
- 21: Motorsteuereinheit, Motorsteuerung
- 22: Motor, Stellmotor, Elektromotor
- 23: Kommunikationsschnittstelle, Netzwerkadapter
- 61: Schaltelement, Halbleiterschalter, FET
- 62: Schaltelement, Diode, Entkoppelungsdiode, FET
- 63: Spannungsregler
- 71: Datenleitungen

- AD: Antriebsdaten, Stellantriebsdaten
- APP: Applikation, App
- AS, US: Einspeisungspunkt
- DIAG: Diagnosedaten
- DP: Stellantriebsdaten
- HVAC: HVAC-Anlage
- PP: Stromversorgung für Peripherieeinheit
- PRG: Betriebsprogramm, Programm, Computerprogramm
- PS: Stromversorgung für elektronische Steuereinheit
- RXD: erste Konfigurationsdaten (zum Empfang bestimmt)
- TXD: zweite Konfigurationsdaten (stellantriebsseitig)
- U1, U2: Vergleichswerte, Spannungsvergleichswerte
- US: zweiter Einspeisungspunkt
- V1, V2: Spannungswerte

## Patentansprüche

1. Stellantrieb für eine Heating-, Ventilation- and Air Conditioning-Anlage (HVAC), welcher einen Stromversorgungsanschluss (6) zum Anschließen des Stellantriebs an eine externe Stromversorgung (4), eine Steuereinheit (10) zur Steuerung und Überwachung des Stellantriebs, eine Peripherieeinheit (20) mit insbesondere leistungsstarken Verbrauchern (21, 22, 23) sowie eine Anschlussbuchse (7) aufweist, welche mit einer seriellen Schnittstelle (12) der Steuereinheit (10) verbunden ist, wobei die Steuereinheit (10) dazu eingerichtet ist, erste Konfigurationsdaten (RXD) von einem an der Anschlussbuchse (7) angeschlossenen Bediengerät (2) zu empfangen und/oder dazu eingerichtet ist, zweite Konfigurationsdaten (TXD) und/oder Diagnosedaten (DIAG) an das Bediengerät (2) zu senden, **dadurch gekennzeichnet,**
- **dass** die Anschlussbuchse (7) und der Stromversorgungsanschluss (6) derart miteinander verschaltet sind, dass ein jeweiliger extern eingespeister Strom ausschließlich in einen gemeinsamen Anschluss (GA) einspeist,
- **dass** dem gemeinsamen Anschluss (GA) ein Spannungsregler (63) zur Stromversorgung der Steuereinheit (10) sowie ein durch diese ansteuerbares Schaltmittel (61) zur Stromversorgung der Peripherieeinheit (20) nachgeschaltet sind, und
- **dass** die Steuereinheit (10) dazu eingerichtet ist, das Schaltmittel (61) erst dann schließend anzusteuern, wenn ein durch die Steuereinheit (10) an einem Einspeisepunkt (AS) des Stromversorgungsanschlusses (6) erfasster erster Spannungswert (V1) einen ersten Vergleichswert (U1) überschreitet oder wenn ein durch die Steuereinheit (10) am gemeinsamen Anschluss (GA) erfasster zweiter Spannungswert (V2) einen zweiten Vergleichswert (U2) überschreitet.

2. Stellantrieb nach Anspruch 1, wobei der erste oder zweite Vergleichswert (U1, U2) derart festgelegt ist, dass der erste oder zweite Spannungswert (V1, V2) den jeweiligen Vergleichswert (U1, U2) nach dem Einschalten der externen Stromversorgung (4) sicher überschreitet.

3. Stellantrieb nach Anspruch 2, wobei die Steuereinheit (10) dazu eingerichtet ist, die ersten Konfigurationsdaten (RXD) nur dann zu empfangen und/oder die zweiten Konfigurationsdaten (TXD) und/oder Diagnosedaten (DIAG) nur dann zu senden, wenn der erste oder zweite Spannungswert (V1, V2) den jeweiligen Vergleichswert (U1, U2) unterschreitet.

4. Stellantrieb nach einem der vorherigen Ansprüche, wobei die Steuereinheit (10) dazu eingerichtet ist, die ersten Konfigurationsdaten (RXD) in einem nichtflüchtigen Speicher (13) abzulegen und/oder darauf basierend ein Betriebsprogramm (PRG) der Steuereinheit (10) zu aktualisieren.

5. Stellantrieb nach einem der vorherigen Ansprüche, wobei die maximale elektrische Gesamtleistung der Peripherieeinheit (20) mindestens um den Faktor 2, insbesondere mindestens um den Faktor 5 größer ist als die maximale elektrische Leistung der für die Datenübertragung erforderlichen elektronischen Komponenten (10-15, 62, 63) des Stellantriebs.

6. Stellantrieb nach Anspruch 5, wobei die Peripherieeinheit (20) zusätzlich die Kommunikationsschnittstelle (23) umfasst.

7. Stellantrieb nach einem der vorherigen Ansprüche, wobei die Steuereinheit (10) einen Mikrocontroller (11), zumindest einen A/D-Umsetzer (14, 15), die serielle Schnittstelle (12) sowie einen nichtflüchtigen Speicher (13) zur Speicherung der Konfigurationsdaten (RXD, TXD) und/oder Diagnosedaten (DIAG) aufweist.

8. Stellantrieb nach Anspruch 7, wobei zumindest eine der elektronischen Komponenten (12-15) im Mikrocontroller (11) integriert ist.

9. Stellantrieb nach Anspruch 7 oder 8, wobei zumindest eines der elektronischen Komponenten (12-15) zumindest mittelbar durch den Spannungsregler (63) elektrisch gespeist wird.

10. Stellantrieb nach einem der vorherigen Ansprüche, wobei die serielle Schnittstelle (12) eine USB-Schnittstelle, eine IEEE 1394-Schnittstelle oder eine Lightning-Schnittstelle ist und wobei die Anschlussbuchse (7) eine USB-Anschlussbuchse, eine IEEE 1394-Anschlussbuchse oder eine Lightning-Anschlussbuchse ist.

## Claims

1. An actuator for a Heating, Ventilation, and Air Conditioning (HVAC) installation, which has a power supply connection (6) for connecting the actuator to an external power supply (4), a control unit (10) for controlling and monitoring the actuator, a peripheral unit (20) with in particular heavy power consumers (21, 22, 23), and also a connection socket (7) which is connected to a serial interface (12) of the control unit (10), wherein the control unit (10) is set up to receive primary configuration data (RXD) from an operating device (2) connected to the connection socket (7) and/or is set up to send secondary configuration data (TXD) and/or diagnostic data (DIAG) to the operating device (2), **characterized in that**
- the connection socket (7) and the power supply connection (6) are interconnected such that a respective current fed in externally feeds exclusively in to a common connection (GA),
- a voltage regulator (63) for supplying power to the control unit (10) and also a switching means (61), which can be activated by said control unit, for supplying power to the peripheral unit (20) are connected downstream of the common connection (GA), and
- the control unit (10) is set up to activate the switching means (61) to close only if a first voltage value (V1) detected by the control unit (10) at a feed-in point (AS) of the power supply connection (6) exceeds a first comparison value (U1) or if a second voltage value (V2) detected by the control unit (10) at the common connection (GA) exceeds a second comparison value (U2).

2. The actuator as claimed in claim 1, wherein the first or second comparison value (U1, U2) is defined such that the first or second voltage value (V1, V2) definitely exceeds the respective comparison value (U1, U2) after the external power supply (4) is switched on.

3. The actuator as claimed in claim 2, wherein the control unit (10) is set up to receive the primary configuration data (RXD) and/or send the secondary configuration data (TXD) and/or diagnostic data (DIAG) only if the first or second voltage value (V1, V2) falls below the respective comparison value (U1, U2).

4. The actuator as claimed in one of the preceding claims, wherein the control unit (10) is set up to store the primary configuration data (RXD) in a nonvolatile memory (13) and/or, on the basis of said data, to update an operating program (PRG) of the control unit (10).

5. The actuator as claimed in one of the preceding claims, wherein the maximum total electrical output of the peripheral unit (20) is greater by at least a factor of 2, in particular by at least a factor of 5, than the maximum electrical output of the electronic components (10-15, 62, 63) of the actuator that are required for data transmission.

6. The actuator as claimed in claim 5, wherein the peripheral unit (20) additionally comprises the communications interface (23) .

7. The actuator as claimed in one of the preceding claims, wherein the control unit (10) has a microcontroller (11), at least one A/D converter (14, 15), the serial interface (12), and also a nonvolatile memory (13) for storing the configuration data (RXD, TXD) and/or diagnostic data (DIAG).

8. The actuator as claimed in claim 7, wherein at least one of the electronic components (12-15) is integrated in to the microcontroller (11).

9. The actuator as claimed in claim 7 or 8, wherein at least one of the electronic components (12-15) receives its electrical feed at least indirectly from the voltage regulator (63) .

10. The actuator as claimed in one of the preceding claims, wherein the serial interface (12) is a USB interface, an IEEE 1394 interface, or a Lightning interface, and wherein the connection socket (7) is a USB connection socket, an IEEE 1394 connection socket, or a Lightning connection socket.

## Revendications

1. Actionneur pour une installation de chauffage, de ventilation et de conditionnement d'air (HVAC), lequel comprend un raccordement d'alimentation électrique (6) pour raccorder le mécanisme de commande à une alimentation électrique externe (4), une unité de commande (10) pour commander et surveiller le mécanisme de commande, une unité périphérique (20) avec en particulier des consommateurs puissants (21, 22, 23) ainsi qu'une prise de raccordement (7) qui est reliée à une interface sérielle (12) de l'unité de commande (10), l'unité de commande (10) étant configurée pour recevoir des premières données de configuration (RXD) d'un appareil de commande (2) raccordé à la prise de raccordement (7) et/ou étant configurée pour envoyer des deuxièmes données de configuration (TXD) et/ou des données de diagnostic (DIAG) à l'appareil de commande (2), **caractérisé en ce que** :
- la prise de raccordement (7) et le raccordement d'alimentation électrique (6) sont interconnectés de telle sorte qu'un courant respectif injecté de manière externe injecte exclusivement dans un raccordement commun (GA) ;
- en aval du raccordement commun (GA) sont montés un régulateur de tension (63) pour l'alimentation électrique de l'unité de commande (10) ainsi qu'un moyen de commutation (61) commandable par celle-ci pour l'alimentation électrique de l'unité périphérique (20) et
- l'unité de commande (10) est configurée pour ne commander le moyen de commutation (61) en fermeture que si une première valeur de tension (V1) captée par l'unité de commande (10) à un point d'injection (AS) du raccordement d'alimentation électrique (6) dépasse une première valeur comparative (U1) ou si une deuxième valeur de tension (V2) captée par l'unité de commande (10) au raccordement commun (GA) dépasse une deuxième valeur comparative (U2).

2. Actionneur selon la revendication 1, la première ou la deuxième valeur comparative (U1, U2) étant déterminée de telle sorte que la première ou la deuxième valeur de tension (V1, V2) dépasse sûrement la valeur comparative respective (U1, U2) après l'enclenchement de l'alimentation électrique externe (4).

3. Actionneur selon la revendication 2, l'unité de commande (10) étant configurée pour ne recevoir les premières données de configuration (RXD) et/ou n'émettre les deuxièmes données de configuration (TXD) et/ou données de diagnostic (DIAG) que si la première ou la deuxième valeur de tension (V1, V2) tombe en dessous de la valeur comparative respective (U1, U2).

4. Actionneur selon l'une des revendications précédentes, l'unité de commande (10) étant configurée pour déposer les premières données de configuration (RXD) dans une mémoire non volatile (13) et/ou actualiser, sur cette base, un programme d'exploitation (PRG) de l'unité de commande (10).

5. Actionneur selon l'une des revendications précédentes, la puissance électrique totale maximale de l'unité périphérique (20) dépassant au moins du facteur 2, et plus particulièrement au moins du facteur 5 la puissance électrique maximale des composants électroniques (10-15, 62, 63) du mécanisme de commande requis pour la transmission de données.

6. Actionneur selon la revendication 5, l'unité périphérique (20) comprenant additionnellement l'interface de communication (23).

7. Actionneur selon l'une des revendications précédentes, l'unité de commande (10) comprenant un microcontrôleur (11), au moins un convertisseur analogique/numérique (14, 15), l'interface sérielle (12) ainsi qu'une mémoire non volatile (13) pour stocker les données de configuration (RXD, TXD) et/ou données de diagnostic (DIAG).

8. Actionneur selon la revendication 7, au moins un des composants électroniques (12-15) étant intégré dans le microcontrôleur (11).

9. Actionneur selon la revendication 7 ou 8, au moins un des composants électroniques (12-15) étant alimenté électriquement au moins indirectement par le régulateur de tension (63).

10. Actionneur selon l'une des revendications précédentes, l'interface sérielle (12) étant une interface USB, une interface IEEE 1394 ou une interface Lightning et la prise de raccordement (7) étant une prise de raccordement USB, une prise de raccordement IEEE 1394 ou une prise de raccordement Lightning.
